Europäisches Patentamt

(19) European Patent Office

Office européen des brevets

(11) Numéro de publication: **0 107 535**
**B1**

(12) **FASCICULE DE BREVET EUROPÉEN**

(45) Date de publication du fascicule du brevet:
28.02.90

(21) Numéro de dépôt: **83401828.5**

(22) Date de dépôt: **19.09.83**

(51) Int. Cl.⁵: **G 01 N 21/33, F 02 D 41/30,**
**G 01 M 15/00**

(54) **Méthode et dispositifs à réponse rapide permettant de déceler une mauvaise combustion.**

(30) Priorité: **22.09.82 FR 8216075**

(43) Date de publication de la demande:
**02.05.84 Bulletin 84/18**

(45) Mention de la délivrance du brevet:
**28.02.90 Bulletin 90/09**

(84) Etats contractants désignés:
**BE CH DE GB IT LI NL SE**

(56) Documents cité:
**DE-A-2 247 451**
**US-A-3 362 387**
**US-A-3 384 746**

**Le dossier contient des informations techniques présentées postérieurement au dépôt de la demande et ne figurant pas dans le présent fascicule.**

(73) Titulaire: **INSTITUT FRANCAIS DU PETROLE**
**4, Avenue de Bois-Préau**
**F-92502 Ruell-Malmaison (FR)**

(72) Inventeur: **Degobert, Paul**
**22, rue Alexis Bouvier**
**F-92500 Rueil-Malmaison (FR)**
Inventeur: **Goldenberg, Emanuel**
**33, avenue du Maréchal Foch**
**F-78300 Poissy (FR)**
Inventeur: **Nadaud, Yvon**
**50, rue du Docteur Bauer**
**F-93400 Saint-Ouen (FR)**
Inventeur: **Molinier, Michel**
**8, avenue Miss Howard**
**F-78170 La Celle Saint-Cloud (FR)**

## Description

La présente invention concerne un méthode et des dispositifs à réponse rapide permettant de déceler la qualité d'une combustion, et d'assurer le réglage d'au moins un paramètre influant sur la combustion, notamment le réglage automatique de la richesse d'alimentation et/ou du taux de recyclage des gaz d'échappement et/ou de l'allumage d'un moteur à allumage commandé.

D'une manière plus particulière, l'invention concerne des dispositifs à réponse rapide s'adaptant aux conduits d'échappement des moteurs à combustion interne, ces dispositifs permettant d'assurer une régulation électronique de la richesse d'alimentation du taux de recyclage des gaz d'échappement et de l'allumage, dans le cas d'un moteur à allumage commandé.

L'art antérieur peut être illustré par les brevets américains numéros 3 362 387, 3 384 746, 3 630 072 et 3 999 383, par la demande de brevet allemand numéro 2 247 451 et par l'article de U. KIENCKE et AL. intitulé "Digitale Regelung des Brennstoffgemisches von Otto-Motoren mit dem Mikrocomputer", publié le 1er janvier 1980 dans la revue intitulée "Regelungstechnik", vol. 28, pages 16 à 21.

Le document US-3 362 387 décrit un dispositif qui détecte la formation de fumée à l'échappement d'un moteur utilisé en régions montagneuses ou l'oxygène se raréfie et où donc le moteur fonctionne en mélange riche. Ce document ne mentionne pas l'utilisation d'un rayonnement ultraviolet en mélange pauvre.

Le document US-3 384 746 concerne un analyseur de gaz et non un appareillage agissant sur le réglage des paramètres de fonctionnement d'un moteur à combustion interne. Cet appareillage comporte une lampe émettant un rayonnement ultraviolet traversant une chambre de mesure.

Le document DE-2 247 451 décrit un dispositif de recyclage des gaz d'echappement.

Un objet essentiel de l'invention est de déceler la mauvaise combustion du mélange carburant/air dans un moteur, que cette mauvaise combustion soit dûe à une combustion tardive, incomplète, qu'elle résulte de l'emploi d'un mélange air-carburant pauvre en carburant, d'une trop grande dilution du mélange air-carburant par les gaz d'échappement, etc...

Cet objectif est atteint, selon l'invention enmesurant sur une partie au moins des gaz effluents du moteur un paramètre pouvant être directement associé à la qualité de la combustion du mélange aircombustible, plus particulièrement lorsqu'on utilise un mélange air-combustible de faible richesse (mélange pauvre), lorsque le mélange air-combustible est fortement dilué par recyclage des gaz d'échappement, ou dans le cas du cliquetis.

Dans un moteur à combustion interne, le temps de réponse pourra être réduit au minimum en effectuant la mesure à proximité immédiate de l'orifice d'échappement de chaque cylindre.

On utilisera avantageusement comme "traceur" caractérisant la mauvaise combustion, les composés aromatiques (benzène, toluène, etc...) contenus dans l'essence, l'accroissement du taux de ces composés dans les gaz d'échappement traduisant une combustion imparfaite.

Ces composés aromatiques présentent la propriété particulière d'absorber le rayonnement ultra-violet et cette proprieté est mise à profit dans la méthode selon l'invention.

Selon l'invention on ajoute au combustible et/ou à l'air de combustion, avant l'entrée dans la chambre de combustion, d'autres composés absorbant le rayonnement ultra-violet et normalement détruits par la combustion, la présence ou l'accroissement de la teneur de ces composés dans les gaz d'échappement traduisant alors une mauvaise combustion.

Ces autres composés seront, par exemple, des composés à groupements chromophores linéaires ou cycliques et plus particulièrement les diènes et polyènes conjugués, les $\alpha$-dicétones, ou les cétones ou aldéhydes $\alpha$ $\beta$ insaturées, les polyènes carbonyl ou dicarbonyl conjugués, les groupements poly-ynes ou poly(ènes-ynes) conjugués, ou des composés azotés, etc... à doubles liaisons conjuguées.

Naturellement, on ne sortira pas du cadre de la présente invention en ajoutant des composés qui réagissent plus ou moins à la combustion en liaison avec la qualité de la combustion et dont au moins un produit de réaction absorbe le rayonnement ultra-violet, la présence, l'absence, l'accroissement ou la diminution de la teneur de ce produit dans les gaz d'échappement permettant d'évaluer la qualité de la combustion. Ainsi, il est possible d'introduire à l'admission de la chambre de combustion un composé fournissant par combustion un produit absorbant le rayonnement ultra-violet lorsque la combustion est de qualité satisfaisante et ne fournissant pas un tel produit ou le fournissant en faible quantité, lorsque la combustion est mauvaise.

Le cas inverse peut être également envisagé dans le cadre de la présente invention. Bien entendu, le choix d'un éventuel composé sera déterminé en fonction des caractéristiques du carburant et/ou du comburant utilisé.

La méthode mise en oeuvre pour régler la combustion par le contrôle à réponse rapide des effluents gazeux d'une chambre de combustion correspondant à l'invention est divulguée dans la revendication 1.

Dans son application au contrôle automatique de la combustion dans un moteur à combustion interne, la méthode selon l'invention se caractérise en ce qu'on commande la richesse d'alimentation du moteur, et/ou le taux de recyclage des gaz d'échappement et/ou l'avance à l'allumage en fonction du degré d'absorption du rayonnement ultra-violet mesuré sur les gaz d'échappement.

Un dispositif selon l'invention est divulguée dans la revendication 8.

La mesure d'absorption du rayonnement ultra-violet effectuée lors de la mise en oeuvre de la présente invention pourra être réalisée soit pour la totalité de la veine gazeuse constituée par les effluents, soit sur une portion de cette veine gazeuse, notamment en en dérivant ou prélevant une partie.

Des exemples non limitatifs de réalisation de l'invention sont illustrés schématiquement par les dessins annexés, où:

- les figures 1 à 3 représentent des exemples d'agencement d'un dispositif selon l'invention,
- la figure 4 montre schématiquement un ensemble de commande électronique de la richesse d'alimentation comprenant un dispositif de mesure du degré d'absorption des rayons ultra-violets par les gaz d'échappement.

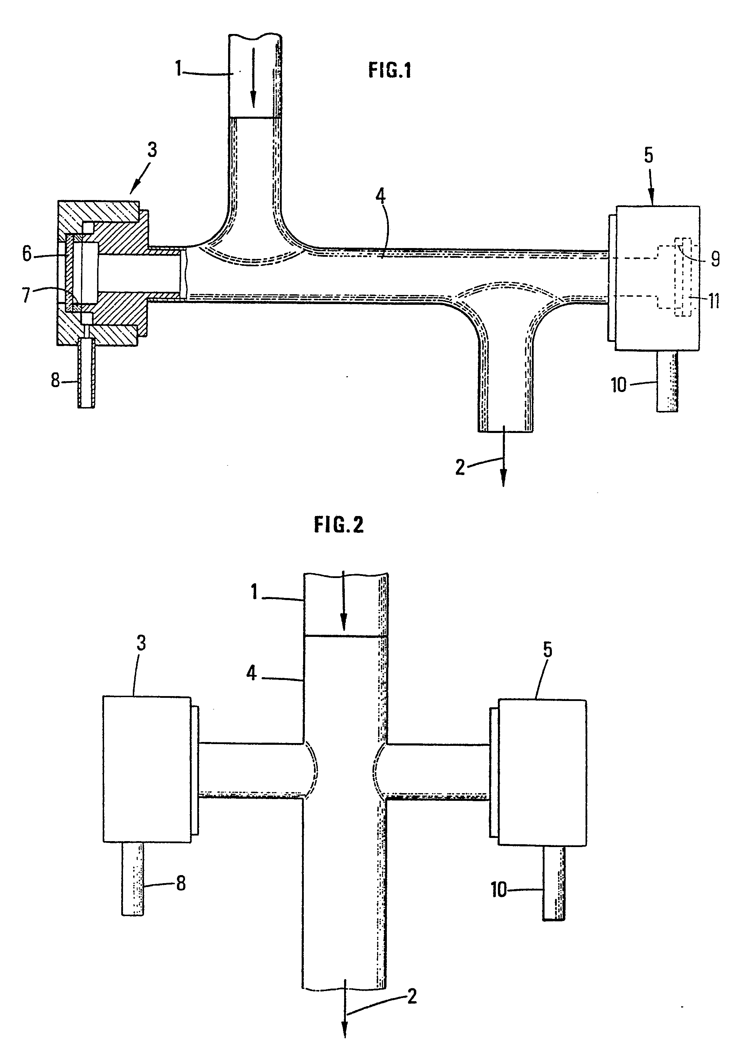

Les figures 1 à 3 montrent schématiquement des exemples d'agencement de dispositifs à réponse rapide mesurant le degré d'absorption des rayons ultra-violets par les gaz d'échappement d'un moteur.

Ces dispositifs sont intercalés entre le collecteur d'échappement 1 du moteur et le tube d'échappement 2, cependant on ne sortirait pas du cadre de l'invention en plaçant les organes de mesure du degré d'absorption directement sur le collecteur d'échappement, afin de réduire au minimum le temps de réponse de la mesure.

Un premier système optique 3 émet un rayonnement ultra-violet vers une zone de volume réduit 4 parcourue par les effluents gazeux du moteur à leur sortie de la chambre de combustion.

Un second système optique 5, séparé du premier par la zone 4, est disposé de façon à recevoir une partie au moins du rayonnement ultra-violet ayant traversé cette zone.

La zone 4 est de volume très réduit de façon à limiter la durée de son balayage par les gaz et par suite, le temps de réponse du dispositif.

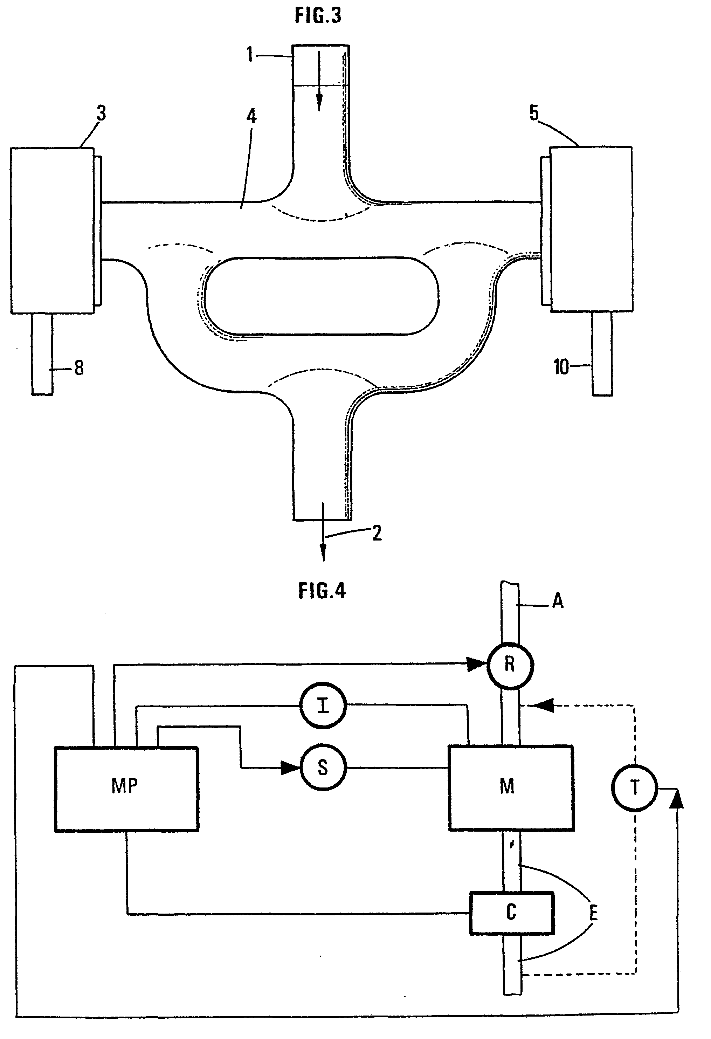

Le premier système optique 3, représenté schématiquement en coupe sur la figure 3, comprend une source 6 émettrice de rayonnement ultra-violet et un collimateur 7.

Il comporte un conduit 8 d'admission d'air ou de tout autre gaz de nettoyage et de refroidissement du collimateur 7, afin notamment d'éviter que celui-ci ne se salisse au contact des gaz d'échappement.

On ne sortira pas du cadre de la présente invention en utilisant d'autres moyens pour assurer la propreté du système optique.

Le second système 5 comprend une lentille de focalisation 9 munie d'un filtre éliminant les longueurs d'onde autres que celles susceptibles d'être absorbées par le "traceur" (ce filtre pourrait également être adjoint au collimateur 7).

Un conduit 10 permet d'admettre de l'air ou tout autre gaz de nettoyage et de refroidissement de la lentille de focalisation.

Un organe de détection approprié 11 reçoit les radiations ultra-violettes ayant traversé la lentille 9 et délivre un signal électrique variant avec le degré d'absorption de ces radiations par les gaz d'échappement s'écoulant à travers la zone 4.

L'injection d'air par les conduits 8 et 10 permettra également d'éliminer la condensation sur les sytèmes optiques au démarrage.

La température des systèmes 3 et 5 pourra éventuellement être contrôlée par thermostatation à l'aide du circuit de refroidissement du moteur.

Pour une source d'émission UV donnée la longueur du trajet optique à travers les effluents qui est nécessaire à une bonne détection dépend du flux lumineux traversant ces effluents, de la concentration du composé, ou "traceur", détecté, de son coefficient d'absorption, ainsi que de la sensiblité du détecteur 11.

Les configurations adoptées selon les figures 2 et 3 présentent l'avantage de réduire la fraction de la zone 4 dans laquelle les gaz d'échappement sont soumis à une certaine dilution par le fluide de nettoyage et de refroidissement introduit par les conduits 8 et 10. En effet, lorsqu'on utilise l'un ou l'autre des modes de réalisation illustrés par les figures 2 et 3, ce fluide ne dilue qu'une partie de l'écoulement gazeux.

Il sera possible, sans sortir pour autant du cadre de l'invention de supprimer dans les dispositifs précédents le collimateur 7 du système 3, en ne conservant dans ce dernier que la source 6 émettant le rayonnement ultra-violet et/ou de supprimer le filtre du système 5 en ne conservant dans ce dernier que la lentille de focalisation 9.

La figure 4 représente schématiquement un tel dispositif de détection à réponse rapide adapté à un moteur à combustion interne M comportant un conduit d'admission A et une canalisation d'échappement E et des organes de réglage pouvant être de types connus et dont chacun est adapté à être actionné par un signal électrique de commande.

Ces organes pourront comprendre un ou plusieurs des organes suivants:

- organe R de réglage de la richesse d'alimentation (cet organe de réglage pourra par exemple agir sur le degré d'ouverture du papillon d'admission d'air ou/et sur le diamètre de la brise d'admission);
- organe T, tel qu'une électro-vanne, permettant le réglage du taux de recyclage des gaz d'échappement dans le cas où le moteur comporte une canalisation de recyclage (dessinée en tirets sur la figure 4) qui est traversée par un débit fonction du degré d'ouverture de la vanne T;
- organe S de réglage de l'avance à l'allumage, dans le cas d'un moteur à allumage commandé;
- organe I de commande de l'instant d'injection ou/et de la quantité de combustible injectée, dans le cas d'un moteur à injection.

Selon l'invention, un dispositif de détection de l'absorption du rayonnement ultra-violet ou capteur C (comprenant les systèmes optiques 3 et 5), tel que décrit plus haut, est placé sur la canalisation d'échappement E, de préférence aussi près que possible de l'orifice ou des orifices d'échappement du moteur.

Ce capteur C produit un signal électrique représentatif de la teneur des gaz d'échappement en "traceur" (tel que défini ci-dessus) non détruit par la combustion.

Le rapport de cette teneur à la teneur en "traceur" à l'admission augmente lorsque la combustion devient mauvaise, par exemple lors de l'utilisation d'un mélange trop pauvre et le signal électrique émanant du capteur c est transmis par l'intermédiaire d'un micro-processeur MP à l'un au moins des organes R, T, S, I définis ci-dessus de façon à réaliser une commande ou un asservissement de ces organes (en boucle ouverte ou fermée) à la teneur en "traceur" ainsi détecté, cet asservissement tendant à maintenir ladite teneur à une valeur minimale.

**Revendications**

1. Méthode permettant de régler la combustion par le contrôle à réponse rapide des effluents gazeux issus d'une chambre de combustion, selon laquelle on émet un rayonnement ultra-violet vers une zone de volume réduit (4) parcourue par au moins une partie des effluents à leur sortie de la chambre de combustion, on reçoit une partie au moins du rayonnement ultra-violet ayant traversé ladite zone (4) et on mesure le degré d'absorption du rayonnement ultra-violet par un composé chimique contenu dans les effluents gazeux, caractérisée en ce que l'on règle au moins un paramètre (I, S, R, T...) influant sur la combustion en fonction dudit degré d'absorption et en ce que l'on ajoute au combustible et/ou à l'air de combustion, avant l'entrée dans la chambre de combustion, des composés absorbant le rayonnement ultra-violet, ces composés étant normalement détruits par la combustion et des composés réagissant plus ou moins en liaison avec la qualité de la combustion en fournissant au moins un produit qui absorbe le rayonnement ultra-violet.

2. Méthode selon la revendication 1, caractérisée en ce qu'elle est appliquée pour régler la combustion d'un mélange pauvre en combustible.

3. Méthode selon l'une quelconque des revendications 1 à 2, caractérisée en ce que l'on effectue la mesure dans une zone située à proximité immédiate de la chambre de combustion.

4. Méthode selon l'une quelconque des revendications 1 à 3, appliquée au contrôle des effluents gazeux d'un moteur à combustion interne (M), caractérisée en ce que l'on commande la richesse d'alimentation (R) du moteur (M) en fonction du degré d'absorption du rayonnement ultra-violet mesuré sur les gaz d'échappement.

5. Méthode selon l'une quelconque des revendications 1 à 4, appliquée au contrôle des effluents gazeux d'un moteur à combustion interne (M), caractérisée en ce que l'on commande le taux de recyclage (T) des gaz d'échappement en fonction du degré d'absorption du rayonnement ultra-violet mesuré sur les gaz d'échappement.

6. Méthode selon l'une quelconque des revendications 1 à 5, appliquée au contrôle des effluents gazeux d'un moteur à combustion interne à allumage commandé, caractérisée en ce que l'on commande l'allumage (S) du moteur en fonction du degré d'absorption du rayonnement ultra-violet mesuré sur les gaz d'échappement.

7. Méthode selon l'une quelconque des revendications 1 à 6, appliquée au contrôle des effluents gazeux d'un moteur à combustion interne à injection, caractérisée en ce que l'on commande l'injection du combustible (I) en fonction du degré d'absorption du rayonnement ultra-violet mesuré sur les gaz d'échappement.

8. Dispositif à réponse rapide permettant la mise en oeuvre de la méthode selon l'une des revendications 1 à 7, ledit dispositif permettant de déceler une mauvaise combustion par le contrôle d'effluents gazeux issus d'une chambre de combustion, comportant en combinaison un premier système optique (3) émettant un rayonnement ultra-violet vers une zone de volume réduit (4) parcourue par au moins une partie des effluents à leur sortie de la chambre de combustion, un second système optique (5) séparé du premier par ladite zone (4), ce second système optique (5) étant disposé de façon à recevoir une partie au moins du rayonnement ultra-violet ayant traversé ladite zone (4) et étant associé à un organe de mesure (11) de l'absorption du rayonnement ultra-violet par un composé chimique ajouté au combustible et/ou à l'air de combustion avant l'entrée dans la chambre de combustion et, réagissant à la combustion, contenu dans les effluents gazeux, ledit degré d'absorption étant représentatif de la richesse du mélange, lesdits systèmes optiques étant munis de conduits d'admission (8, 10) d'un gaz de refroidissement de ces systèmes et de nettoyage de leurs parois situées au contact des effluents, ledit dispositif comportant en outre un organe de réglage (I, R, S, T...) d'au moins un paramètre influant sur la combustion en fonction dudit degré d'absorption.

9. Dispositif selon la revendication 8, adapté à un moteur à combustion interne, caractérisé en ce que lesdits systèmes optiques (3, 5) sont disposés au contact des gaz d'échappement du moteur, à proximité immédiate des orifices d'échappement de celui-ci.

10. Dispositif selon l'une quelconque des revendications 8 ou 9, adapté à un moteur à combustion interne, caractérisé en ce que ledit organe de mesure de l'absorption du rayonnement ultra-violet (11) est relié à un organe de réglage de la richesse (R) d'alimentation du moteur.

11. Dispositif selon l'une quelconque des revendications 8 à 10, adapté à un moteur à combustion interne, caractérisé en ce que ledit organe de mesure de l'absorption du rayonnement ultra-violet est relié à un organe de réglage du taux de recyclage (T) des gaz d'échappement.

12. Dispositif selon l'une quelconque des revendications 8 à 11, adapté à un moteur à combustion interne à allumage commandé, caractérisé en ce que ledit organe de mesure d' l'absorption du rayonnement ultra-violet est relié à un organe de réglage de l'allumage du moteur (S).

13. Dispositif selon l'une quelconque des revendications 8 à 12, adapté à un moteur à combustion interne à injection, caractérisé en ce que ledit organe de mesure de l'absorption du rayonnement ultra-violet est relié à un organe de réglage de l'injection du combustible (I).

**Patentansprüche**

1. Verfahren zur Einstellregelung der Verbrennung durch schnellansprechende Regelung der gasförmigen aus einer Verbrennungskammer stammenden Abgase, wonach man eine Ultraviolettstrahlung gegen eine Zone reduzierten Volumens (4) aussendet, die von wenigstens einem Teil der Abströme am Austritt aus der Verbrennungskammer durchströmt wird, man wenigstens einen Teil der Ultraviolettstrahlung, die diese Zone (4) durchströmt hat, auffängt und den Absorptionsgrad der Ultraviolettstrahlung durch eine chemische Zusammensetzung, die in den gasförmigen Abströmen enthalten ist, mißt, dadurch gekennzeichnet, daß man wenigstens einen Parameter (I, S, R, T...) einstellregelt, der die Verbrennung als Funktion dieses Absorptionsgrades beeinflußt, und daß man dem Brennstoff und/oder der Verbrennungsluft, vor dem Eintritt in die Verbrennungskammer, die Ultraviolettstrahlung absorbierende Verbindungen zusetzt, wobei diese Verbindungen normalerweise durch die Verbrennung zerstört werden sowie Verbindungen zusetzt, die mehr oder weniger in Verbindung mit der Qualität der Verbrennung reagieren, indem sie wenigstens ein die Ultraviolettstrahlung absorbierendes Produkt liefern.

2. Verfahren nach Anspruch 1, dadurch gekennzeichnet, daß es angewendet wird, um die Verbrennung eines an Brennstoff armen Gemisches (einstell)zuregeln.

3. Verfahren nach einem der Ansprüche 1 bis 2, dadurch gekennzeichnet, daß man die Messung in einer Zone vornimmt, die in unmittelbarer Nachbarschaft der Verbrennungskammer angeordnet ist.

4. Verfahren nach einem der Ansprüche 1 bis 3, in Anwendung auf die Regelung der gasförmigen Abströme aus einer Verbrennungskraftmaschine (M), dadurch gekennzeichnet, daß man die Reichheit in der Speisung (R) des Motors (M) mit innerer Verbrennung als Funktion des Absorptionsgrades der Ultraviolettstrahlung steuert, die an den Austrittsgasen gemessen wurde.

5. Verfahren nach einem der Ansprüche 1 bis 4, angewendet auf die Regelung der gasförmigen Abströme aus einem Motor (M) mit innerer Verbrennung, dadurch gekennzeichnet, daß man den Rezyklisierungsgrad (T) der Austrittsgase als Funktion des Absorptionsgrades für Ultraviolettstrahlung steuert, wie sie in den Austrittsgasen gemessen wurde.

6. Verfahren nach einem der Ansprüche 1 bis 5, in Anwendung auf die Regelung der gasförmigen Abströme aus einem Motor mit innerer Verbrennung mit gesteuerter Zündung, dadurch gekennzeichnet, daß man die Zündung (S) des Motors als Funktion des Absorptionsgrades der Ultraviolettstrahlung steuert, die in den Austrittsgasen gemessen wurde.

7. Verfahren nach einem der Ansprüche 1 bis 6, in Anwendung auf die Regelung der gasförmigen Abströme eines Motors mit innerer Verbrennung, dadurch gekennzeichnet, daß man die Brennstoffeinspritzung (I) als Funktion des Absorptionsgrades der in den Abgasen gemessenen Ultraviolettstrahlung steuert.

8. Schnellansprechende Vorrichtung zur Durchführung des Verfahrens nach einem der Ansprüche 1 bis 7, wobei die Vorrichtung es ermöglicht, eine schlechte Verbrennung durch Regelung der gasförmigen aus einer Verbrennungskammer stammenden Abströme zu verzögern, mit in Kombination einem ersten optischen System (3), das eine Ultraviolettstrahlung gegen eine Zone reduzierten Volumens (4) aussendet, die durch wenigstens einen Teil der Abströme an ihrem Austritt aus der Verbrennungskammer durchlaufen wird, einem zweiten optischen von der ersten Zone (4) getrennten System (5), wobei dieses zweite optische System (5) derart angeordnet ist, daß es wenigstens einen Teil der Ultraviolettstrahlung empfängt, die diese Zone (4) durchsetzt hat und einem Meßorgan (11) für die Absorption der Ultraviolettstrahlung durch eine chemische Verbindung zugeordnet ist, die den Brennstoff und/oder der Verbrennungsluft vor dem Eintritt in die Brennkammer zugegeben wird und bei der Verbrennung reagiert und in den gasförmigen Abströmen enthalten ist, wobei der Absorptionsgrad repräsentativ für die Reichheit des Gemisches ist und diese optischen Systeme mit Einlaßleitungen (8, 10) für ein Kühlgas für diese Systeme und zur Reinigung ihrer Wände vorgesehen sind, die in Kontakt mit den Abströmen angeordnet sind, wobei diese Vorrichtung im übrigen ein Einstellorgan (I, R, S, T ...) für wenigstens einen Parameter umfaßt, der auf die Verbrennung als Funktion dieses Absorptionsgrades einwirkt.

9

9. Vorrichtung nach Anspruch 8, ausgelegt für einen Motor mit innerer Verbrennung dadurch gekennzeichnet, daß diese optischen Systeme (3, 5) in Kontakt mit den Austrittsgasen des Motors in unmittelbarer Nähe von dessen Auslaßöffnungen angeordnet sind.

10. Vorrichtung nach einem der Ansprüche 8 oder 9, ausgelegt für einen Motor mit innerer Verbrennung, dadurch gekennzeichnet, daß dieses Meßorgan für die Absorption der Ultraviolettstrahlung (11) mit einem Organ für die Einstellregelung des Reichheitsgrades (R) der Speisung des Motors verbunden ist.

11. Vorrichtung nach einem der Ansprüche 8 bis 10, ausgelegt für einen Motor mit innerer Verbrennung, dadurch gekennzeichnet, daß dieses Meßorgan für die Absorption der Ultraviolettstrahlung verbunden ist mit einem Einstellorgan für den Rezyklisierungsgrad (T) der Austrittsgase.

12. Vorrichtung nach einem der Ansprüche 8 bis 11, ausgelegt für einen Motor mit innerer Verbrennung und gesteuerter Zündung, dadurch gekennzeichnet, daß dieses Meßorgan für die Absorption der Ultraviolettstrahlung mit einem Einstellregelorgan für die Zündung des Motors (S) verbunden ist.

13. Vorrichtung nach einem der Ansprüche 8 bis 12, ausgelegt für einen Motor mit innerer Verbrennung und Einspritzung, dadurch gekennzeichnet, daß dieses Meßorgan für die Absorption der Ultraviolettstrahlung verbunden ist mit einem Einstellregelorgan für die Einspritzung des Brennstoffes (I).

Claims

1. Method for regulating combustion by means of a rapid response system for controlling the gaseous discharges issuing from a combustion chamber, comprising ultra violet radiation emitted towards a zone of reduced volume (4) traversed by at least part of the discharge gases at their outlet from the combustion chamber, at least part of the ultra violet radiation having passed through the said zone (4) being received and the degree of absorption of ultra violet radiation measured by means of a chemical compound contained in the gaseous discharge, characterised in that at least one parameter (I, S, R, T, ...) affecting the combustion being regulated in accordance with the said degree of asborption and in that compounds absorbing the ultra violet radiation are added to the fuel and/or to the combustion air before entering into the combustion chamber, these compounds being normally destroyed during the combustion stage and compounds reacting more or less in accordance with the quality of combustion by supplying at least one product which absorbs the ultra violet radiation.

10

2. Method in accordance with claim 1, characterised in that it is applied to regulate the combustion of a weak or lean mixture of the fuel.

3. Method in accordance with any one of claims 1 to 2, characterised in that the measurement is carried out in a zone located in the immediate vicinity of the combustion chamber.

4. Method in accordance with any one of claims 1 to 3, applied to the control of the gaseous discharges from an internal combustion engine (M), characterised in that the richness of the supply (R) for the engine (M) is controlled in accordance with the degree of absorption of the ultra violet radiation measured for the exhaust gases.

5. Method in accordance with any one of claims 1 to 4, applied to the control of the gaseous discharges from an internal combustion engine (M), characterised in that the rate of recycling (T) of the exhaust gases is controlled in accordance with the degree of absorption of the ultra violet radiation measured for the exhaust gases.

6. Method in accordance with any one of claims 1 to 5, applied to the control of the gaseous discharges from a controlled ignition internal combustion engine, characterised in that the ignition (S) of the engine is controlled in accordance with the degree of absorption of the ultra violet radiation measured for the exhaust gases.

7. Method in accordance with any one of claims 1 to 6, applied to the control of the gaseous discharges from a fuel injection internal combustion engine, characterised in that the injection of the fuel (I) is controlled in accordance with the degree of absorption of the ultra violet radiation measured for the exhaust gases.

8. A rapid response device for application of the method in accordance with one of claims 1 to 7, the said device enabling incorrect combustion to be determined by controlling the gaseous discharges issuing from a combustion chamber, comprising, in combination, a first optical system (3) emitting ultra violet radiation towards a zone of reduced volume (4) traversed by at least part of the gaseous discharge at the outlet from the combustion chamber, a second optical system (5) separated from the first optical system by the said zone (4), this second optical system (5) being arranged so as to receive at least part of the ultra violet radiation having traversed the said zone (4) and being associated with a device (11) for measuring the absorption of ultra violet radiation by means of a chemical compound added to the fuel and/or the combustion air before entering the combustion chamber and reacting, during the combustion stage, on the compound contained in the gaseous discharge, the said degree of absorption being representative of the richness of the mixture, the said optical systems being provided with pipes (8, 10) for emitting a gas for cooling these systems and cleaning their walls in contact with the discharges, the said device also including a device for regulating (I, R, S, T ...) at least one parameter affecting combustion in terms of the said degree of absorption.

9. Device in accordance with claim 8, adapted to an internal combustion engine, characterised in that the said optical systems (3, 5) are in contact with the exhaust gases for the engine in the immediate vicinity of its exhaust ports.

10. Device in accordance with any one of claims 8 or 9, adapted to an internal combustion engine, characterised in that the said device for measuring the absorption of ultra violet radiation (11) is connected to a device for regulating the richness (R) of the supply to the engine.

11. Device in accordance with any one of claims 8 to 10, adapted to an internal combustion engine, characterised in that the said device for measuring the absorption of ultra violet radiation is connected to a device for regulating the rate of recycling (T) of the exhaust gases.

12. Device in accordance with any one of claims 8 to 11, adapted to a controlled ignition internal combustion engine, characterised in that the said device for measuring the absorption of ultra violet radiation is connected to a device for regulating the engine ignition (S).

13. Device in accordance with any one of claims 8 to 12, adapted to a fuel injection internal combustion engine, characterised in that the said device for measuring the absorption of ultra violet radiation is connected to a device for regulating injection of fuel (I).

FIG.1

FIG.2

## FIG.3

## FIG.4